# EUROPEAN PATENT SPECIFICATION

(11) **EP 2 852 300 B1**
(45) Date of publication and mention of the grant of the patent: **25.12.2024**
(21) Application number: 13724707.8
(22) Date of filing: 17.05.2013
(51) Int. Cl.: A23K 10/20, A23K 50/40

(54) **CANNED FOOD PRODUCTS HAVING ONE OR MORE FILLINGS**
DOSENNAHRUNGSMITTELPRODUKTE MIT EINER ODER MEHREREN FÜLLUNGEN
PRODUITS ALIMENTAIRES EN CONSERVE AYANT UNE OU PLUSIEURS GARNITURES

(30) Priority: 21.05.2012 US 201261649578 P
(43) Date of publication of application: 01.04.2015
(73) Proprietor: Société des Produits Nestlé S.A., 1800 Vevey (CH)
(72) Inventor: WATELAIN, Annie, 80300 Lavieville (FR); KOMAREK, David, 80800 Sailly Le Sec (FR); SISIAK, Laurent, 80380 Villers Bretonneux (FR); FRISCOURT, Julie, 87000 Aubigny (FR); RAYNER, Jean, Luz, St. Joseph MO 64507 (US); DECKART, Maquel, Unit 409, St. Louis, MO 63104 (US); RAYNER, Michael, G., St. Joseph MO 64507 (US)
(74) Representative: Rupp, Christian
(86) International application number: PCT/US2013/041521
(87) International publication number: WO 2013/176974

(56) References cited:
- WO-A1-98/05219
- US-A- 3 808 340
- US-B1- 6 613 372

## Description

### CROSS REFERENCE TO RELATED APPLICATIONS

### BACKGROUND OF THE INVENTION

### Field of the Invention

The invention relates generally to food products and particularly to canned food products that contain a meat emulsion encasing one or more hydrocolloid dispersions having a different appearance and texture and to methods for making such food products.

### Description of Related Art

Canned food products come in many forms. Such products can be loaf type products having variations in texture and appearance, meat loaf products having a distinct appearance and texture, or aerated mousse products having their typical airy texture and appearance. These products are typically prepared by comminuting raw meat and mixing it with water, salt, spices, curing agents, gelling agents and, if necessary, fats to form a batter that is then heated. The heated batter is then filled into containers such as cans to form, after retorting and cooling, a meat loaf. Variations in loaf texture and appearance are achieved by varying particle size in the batter and by varying the type and level of binders in the batter.

Another common form of canned food products is meat or meat analog chunks (US4781939, US6379738 and US6692787) or slices (EP 1 565 069 A1) in gravy or sauce. Other variations include the meat or meat analog chunks in loaf (US6440485), aspic, or gel form. Further variations in canned food product image include distinct bi-layering of chunks and loaf forms (US6582740) or multi-layering of these (US6911224). Other variations are made by introducing a center filling where the center filling layer is a loaf batter of a different color or texture or both, or where the center filling is chunks in gravy (EP 1 061 815 B1). For this product, the center filling was visible on removal of the lid (top) and on emptying (bottom).

These canned food products are adequate for their purpose. However, consumers of canned food products, including pet owners and caregivers, are continually seeking novel yet appealing canned food product forms or varieties. There is, therefore, a need for new canned food products that bring variety and appeal to consumers, including meat-filled type products that are highly desirable by the consumer.

WO 98/05219 A1 describes a canned pet food product having a base layer and an upper layer.

### SUMMARY OF THE INVENTION

It is, therefore, an object of the present invention to provide canned food products comprising a can containing a meat emulsion encasing one or more hydrocolloid dispersions according to claim 1.

Further disclosed are food products comprising a meat emulsion encasing one or more hydrocolloid dispersions.

It is a another object of the invention to provide methods for making food products containing a meat emulsion encasing one or more hydrocolloid dispersions that have a different appearance and texture when compared to the meat emulsion.

Further disclosed are multi-pack packages of the canned food products of the invention.

One or more of these or other objects or disclosure are achieved by providing food products comprising a meat emulsion encasing one or more hydrocolloid dispersions. The one or more hydrocolloid dispersions have a unique texture and a unique appearance when compared to the meat emulsion. Due to the low miscibility or non-miscibility of the one or more hydrocolloid dispersions and the meat emulsion, the food products have two distinct and separate phases - an inner phase corresponding to the one or more hydrocolloid dispersions and an outer phase corresponding to the meat emulsion.

Other and further objects, features, and advantages of the present invention will be readily apparent to those skilled in the art.

### DETAILED DESCRIPTION OF THE INVENTION

### Definitions

The term "encased" means that one or more hydrocolloid dispersions are completely or substantially enclosed by a meat emulsion, where the one or more hydrocolloid dispersions are substantially enclosed if less than 25% of the one or more hydrocolloid dispersions are visible on the surface for the food product.

The term "can" means a rigid retortable container, e.g., a metal container such as a metal or metal alloy can, a plastic container, a glass container, and combinations thereof.

The term "canned" means that a food product is contained in a can.

The term "companion animal" means domesticated animals such as cats, dogs, rabbits, guinea pigs, ferrets, hamsters, mice, gerbils, horses, cows, goats, sheep, donkeys, pigs, and the like.

All percentages expressed herein are by weight of the total weight of the food composition unless expressed otherwise. For example, an ingredient in an amount of 25% by weight means that the amount of the ingredient is 25% of the total weight of the food composition. Thus, if the total weight of the food composition is 100 grams, the actual amount of the ingredient corresponding to 25% by weight would be 25 grams.

### The Invention

In one aspect, the invention provides food products comprising a can, the can comprising one or more hydrocolloid dispersions in the interior of the can, each of the one or more hydrocolloid dispersions is a flowable sol having a creamy appearance selected from the group consisting of xanthan, carboxy methyl cellulose, konjac, guar, agar agar, gum arabic, locust bean gum, cassia, acacia, alginate, carobe or a combination thereof and comprising from about 25 to about 75% of the food product; and a meat emulsion encasing the one or more hydrocolloid dispersions, wherein the meat emulsion comprises muscle meat and collagen or wherein the meat emulsion comprises a fribrillar protein and at least one polysaccharide. Generally, the meat emulsion forms an outer matrix encasing the one or more hydrocolloid dispersions and the one or more hydrocolloid dispersions and the meat emulsion have a different appearance, texture, or other distinguishing property when compared. In one embodiment, the invention provides a food product including a firmly set meat emulsion forming an outer matrix encasing one or more hydrocolloid dispersions.

It is disclosed that the one or more hydrocolloid dispersions and the meat emulsion comprise any suitable amount of the food product. In various embodiments, the one or more hydrocolloid dispersions comprise from about 30 to about 70% of the food product
The one or more hydrocolloid dispersions comprise from about 25 to about 75% of the food product. In certain embodiments the meat emulsion comprises the remaining 75 to 25% of the food product.

The one or more hydrocolloid dispersions are in the form of a flowable sol. The one or more hydrocolloid dispersions are in the form of a flowable sol that gives a creamy or sauce-like appearance comprising from about 25 to about 75% of the food product.

The one or more hydrocolloid dispersions comprise xanthan, carboxy methyl cellulose, konjac, guar, agar agar, gum arabic, locust bean gum, cassia, acacia, alginate, carobe, or a combination thereof.

In one embodiment, the meat emulsion comprises fibrillar protein and polysaccharides. Suitable fibrillar proteins include myosin, actin, actomyosin, collagen, and mixtures thereof, *e.g.,* protein from bovine, equine, ovine, avian, porcine, caprine, ovine, and piscine. Examples of suitable polysaccharides include starches, gums, or mixtures thereof.

In another embodiment, the meat emulsion comprises muscle meat and collagen. The resulting food product is a firmly set protein matrix encasing one or more hydrocolloid dispersions. The one or more hydrocolloid dispersions comprise from about 25 to about 75% of the food product and the meat emulsion correspondingly comprises the remaining 75 to 25% of the food product.

The one or more hydrocolloid dispersions and the meat emulsion are not miscible or have low miscibility and thus form two different phases that do not mix when the food product is formed. The food product is therefore composed of two separate phases - an inner phase corresponding to the one or more hydrocolloid dispersions and an outer phase corresponding to the meat emulsion.

In various embodiments, at least one of the one or more hydrocolloid dispersions and the meat emulsion comprise additional ingredients. For example, one or more of the hydrocolloid dispersions and/or the meat emulsion comprise visible pieces of real or simulated ingredients for aesthetic appeal or nutritional function. In some embodiments, at least one of the one or more hydrocolloid dispersions or the meat emulsion comprise solubilized or dispersed nutritional ingredients, flavor or aroma compounds, or encapsulated flavors or nutrients for release during retorting, in the mouth or in the alimentary tract.

In another aspect, the invention provides methods for making food products according to the invention. The methods comprise forming one or more hydrocolloid dispersions, forming a meat emulsion, filling the one or more hydrocolloid dispersions and the meat emulsion into a can such that the meat emulsion encases the one or more hydrocolloid dispersions. In an embodiment, a method for making the food product comprises forming the one or more hydrocolloid dispersions, separately forming the meat emulsion, pumping the one or more hydrocolloid dispersions into a can, and pumping the meat emulsion into the can such that the meat emulsion encases the one or more hydrocolloid dispersions. In preferred embodiments, the methods further comprise the steps of placing a lid on the can after the one or more hydrocolloid dispersions and the meat emulsion have been filled into the can, sealing the can (hermetically sealing the can), and retorting the can. Generally, the can is subsequently cooled or allowed to equilibrate to room temperature. The resulting food product is a firmly set meat emulsion forming an outer matrix completely or substantially encasing the one or more hydrocolloid dispersions.

The can is retorted at any suitable temperature for a suitable time. For example, the can is retorted at a temperature of from about 118 to 128°C for from about 20 to about 60 minutes. In preferred embodiments, the can is retorted at from about 121 to about 126°C for from about 25 to about 50 minutes.

The can is cooled to any suitable temperature. For example, the can may be cooled to a temperature of 20 to 35°C. In an embodiment, the can is cooled to 22 to 26°C. The can may be cooled by allowing it to set until it equilibrates to room temperature or may be cooled to room or any other temperature using refrigeration or other suitable means.

The filled can may be inverted before retorting.

The food product of the invention is useful as a food product for any animal that consumes such food products, *e.g.,* humans, felines, canines, bovines, equines, ovines, avians, porcines, caprines, ovines, and the like. In preferred embodiments, the food product is a companion animal food product, *e.g.,* a pet food for dogs or cats. In more preferred embodiments, the food product is a food product for dogs or cats.

In an alternative embodiment, a method for making the food product comprises filling the can by pumping half of the meat emulsion into the can, followed by pumping the one or more hydrocolloid dispersions onto the meat emulsion, and pumping the remaining half of the meat emulsion onto the one or more hydrocolloid dispersions so that it covers the one or more hydrocolloid dispersions. The method may further comprise the steps of placing a lid on the filled can, hermetically sealing the filled can, retorting the filled can, and cooling the retorted can.

An alternative method for making the food product comprises delivering the meat emulsion to a can and injecting the one or more hydrocolloid dispersions into the meat emulsion. The food product may also be produced by co-extruding the one or more hydrocolloid dispersions at a first rate and the meat emulsion at a second rate and adjusting the first rate and the second rate to allow the meat emulsion to encase the one or more hydrocolloid dispersions.

Meat emulsions and hydrocolloid dispersions and methods for making such emulsions and dispersions are known to skilled artisans.

It is disclosed that, the invention provides multi-pack packages useful for conveniently providing the canned food products of the invention to consumers. The multi-pack packages comprise a plurality of cans containing a canned food product of the invention arranged in an array and one or more devices for retaining the cans in the array. It is further disclosed that the multi-pack packages have one or more handles affixed to the packages to facilitate handling and transporting the packages. It is further disclosed that, the devices are boxes made from paper, plastic, polymers, and combinations thereof. It is further disclosed that the devices can be systems of connected plastic rings affixed to each of the containers. It is further disclosed that, the devices can be wrappings of plastic of similar materials, *e.g.,* twelve cans stacked in an array and wrapped in plastic. It is further disclosed that, the multi-pack packages further comprise one or more indicia describing the contents of the containers in the packages, *e.g.,* labels, printing on the packages, stickers, and the like. It is disclosed that, the devices further comprise one or more windows that permit the package contents to be viewed without opening the multi-pack package. It is dis closed that, the windows are a transparent portion of the devices. or that the windows are missing portions of the devices that permit the containers to be viewed without opening the multi-pack package.

### EXAMPLES

The invention can be further illustrated by the following examples, although it will be understood that these examples are included merely for purposes of illustration and are not intended to limit the scope of the invention unless otherwise specifically indicated.

### Example 1

A 100 Kg batch of meat emulsion (outer matrix casing) preparation was made according to the formulation shown in Table 1(a). The meats and fish ingredients, which were in a frozen state, were crushed to break up into less than 10 cm chunks. These chunks were then ground with a meat grinder and extruded through die plates with openings of 3.175 mm diameter. The ground meats were transferred to a Rietz mixer and, with continuous mixing, water and all remaining ingredients were added while the temperature of this mixture was raised to 41.5°C using direct steam injection. Mixing was continued for an additional 5 minutes, by which time the mixture was homogenous. This mixture was then emulsified with a Kinematica emulsifier.

**Table 1(a)**

| Meat Emulsion | |
|---|---|
| Ingredients | Kg |
| Pork Meat Mix | 36.3 |
| Pork Liver | 2.7 |
| Fish | 41.1 |
| Blend - Vitamins, Minerals, Colors, Flavors Guar Gum | 1.7 0.2 |
| Water / Steam | 18.3 |
| Total | 100.0 |

In parallel, a 100 Kg of a starch/hydrocolloid based emulsion was prepared as follows using the formulation shown in Table 1(b). 92.3 kg of water was heated to 96°C in a steam-jacketed stainless steel vessel. A high speed/high Tekmar disperser was then inserted into the water with the blades at a depth approximately 75% from the surface of the water. All of the other ingredients were mixed together in a plastic bag. With the disperser running, the mixture of ingredients was slowly poured into the vortex created by the high speed rotation of the disperser.

**Table 1(b)**

| Hydrocolloid Dispersion | |
|---|---|
| Ingredients | Kg |
| Starch (Propylated) | 3.5 |
| Konjac/Xanthan (50/50) blend | 1.0 |
| Spinach flakes | 1.0 |
| Tri-sodium phosphate | 1.0 |
| Flavor blend | 1.0 |
| Color (red and caramel) blend | 0.2 |
| Water | 92.3 |
| Total | 100.0 |

Mixing was continued for a minute after all of the solids were fully dispersed. The temperature of the dispersion was maintained at 90 to 97°C until filling into cans was completed.

The ingredients were combined in an 85 gram can as follows. 32 grams of a meat emulsion was metered into a can. This was immediately followed by metering 20 grams of a starch/hydrocolloid dispersion and topping off with 32 grams of the meat emulsion. The can was then lidded, hermetically sealed, retorted at 121°C for 40 minutes, and cooled to room temperature (22 to 26°C). The can was opened and the contents examined. The food product in the can was a hydrocolloid dispersion completely encased by a meat emulsion.

### Example 2

A meat emulsion was made as in Example 1 using the formulation show in Table 1(a). The starch/hydrocolloid dispersion was made as in Example 1 but using the formulation shown in Table 2. The konjac/xanthan hydrocolloid dispersion blend was doubled compared to that in Example 1. The filling, canning, and retorting conditions were the same as in Example 1. The can was opened and the contents examined. The food product in the can was a hydrocolloid dispersion completely encased by a meat emulsion.

**Table 2**

| Hydrocolloid Dispersion | |
|---|---|
| Ingredients | Kg |
| Starch (Propylated) | 3.5 |
| Konjac/Xanthan (50/50) blend | 2.0 |
| Spinach flakes | 1.0 |
| Tri-sodium phosphate | 1.0 |
| Flavor blend | 1.0 |
| Color (yellow) blend | 0.7 |
| Water | 90.8 |
| Total | 100.0 |

### Example 3

Ingredients for a 2 Kg batch of xanthan based (hydrocolloid) tablets were weighed out according to the formula shown in Table 3 and blended a dry blender for one minute to form a dry powder mix. The powder mix was then formed into tablets by compressing in a tablet press with force of 50 kilo Newton. Tablets of three different dimensions were made as shown in Table 4.

**Table 3**

| Xanthan-based Tablets | | |
|---|---|---|
| | Ingredients | Kg |
| Powder | Xanthan gum | 0.2 |
| | Maltodextrin | 0.8 |
| | Microcrystalline cellulose | 1 |
| Total | | 2 |

**Table 4**

| Tablet Sizes | | |
|---|---|---|
| Tablet description | Xanthan | CMC |
| 11 mm diameter-2mm height | x | x |
| 7mm diameter -4mm height | x | x |
| 7mm diameter -2mm height | x | x |

### Example 4

Ingredients for a 2 Kg batch of carboxy methyl cellulose (CMC) based (hydrocolloid) tablets weighed out according to formula shown in Table 5 and made into tablets as shown in Example 3 and Table 4.

**Table 5**

| CMC-based Tablets | | |
|---|---|---|
| | Ingredients | Kg |
| Powder | Carboxy Methyl Cellulose | 0.2 |
| | Maltodextrin | 0.8 |
| | Microcrystalline cellulose | 1 |
| Total | | 2 |

### Example 5

A 100 Kg meat emulsion preparation was made according to the formulation shown in Table 6. The meat ingredients were weighed and macro ground in a meat grinder into pieces of about 20 mm in size. With continuous mixing, the dry ingredients (vitamin premix, minerals, colorants, corn starch, and carob gum) were mixed with the ground meat. Potable water and steam were added to reach a temperature between 52 to 55°C and moisture 76% (target 74 to 77%), while mixing. Mixing was continued for an additional 5 minutes. The flavor blend was added at the end of the mixing before the emulsification step. The subsequent mix was then micro ground through 6 + 3 mm whole plates which resulted in a homogenous meat emulsion.

**Table 6**

| Meat Emulsion | | |
|---|---|---|
| | Ingredients | Kg |
| Meats | Liver Frozen | 18.6 |
| | Poultry MRM Frozen | 17.1 |
| | Kidney Frozen | 11.6 |
| | Pork Lung Untrimmed Frozen | 10.6 |
| | Poultry Byproduct Mix Frozen | 6.3 |
| Powders/Dries | Modified Corn Starch | 0.78 |
| | Carob Gum | 0.42 |
| | Colorants | 1.31 |
| | Vitamins/Minerals | 1.57 |
| 1 | Flavor Blend | 1.55 |
| Water / Steam | | 30.17 |
| Total | | 100.0 |

### Example 6

40 g of the meat emulsion from Example 5 was filled into a can and an 11 mm diameter xanthan-based tablet added to the center followed by an additional 40 g of meat emulsion. The can was then lidded, hermetically sealed, and retorted at 126°C for 28 minutes. During the retorting process, the xanthan-based tablet absorbed water forming a gel with the meat emulsion set solid around the gel. The can was opened and the contents examined. The food product in the can was a hydrocolloid dispersion completely encased by a meat emulsion.

### Example 7

Example 6 was repeated with the 11 mm diameter CMC-based tablet. During the retorting process, the xanthan-based tablet absorbed water forming a gel with the meat emulsion set solid around the gel. The can was opened and the contents examined. The food product in the can was a hydrocolloid dispersion completely encased by a meat emulsion.

### Example 8

Example 6 was repeated with 4 smaller (7 mm diameter) xanthan-based tablets. During the retorting process, the xanthan-based tablets absorbed water forming 4 gel spots with the meat emulsion set solid around the 4 gel spots. The can was opened and the contents examined. The food product in the can was 4 hydrocolloid dispersions completely encased by a meat emulsion.

### Example 8

Example 6 was repeated with 4 smaller (7 mm diameter) CMC-based tablets. During the retorting process, the CMC-based tablets absorbed water forming 4 gel spots with the meat emulsion set solid around the 4 gel spots. The can was opened and the contents examined. The food product in the can was 4 hydrocolloid dispersions completely encased by a meat emulsion.

In the specification, there have been disclosed typical preferred embodiments of the invention. Although specific terms are employed, they are used in a generic and descriptive sense only and not for purposes of limitation. The scope of the invention is set forth in the claims. Obviously many modifications and variations of the invention are possible in light of the above teachings. It is therefore to be understood that within the scope of the appended claims the invention may be practiced otherwise than as specifically described.

## Claims

1. A canned food product comprising:
a can, the can comprising:
one or more hydrocolloid dispersions in the interior of the can; each of the one or more hydrocolloid dispersions is a flowable sol having a creamy appearance selected from the group consisting of xanthan, carboxy methyl cellulose, konjac, guar, agar agar, gum arabic, locust bean gum, cassia, acacia, alginate, carobe, or a combination thereof and comprising from about 25 to about 75 % of the food product; and
a meat emulsion encasing the one or more hydrocolloid dispersions; wherein the meat emulsion comprises muscle meat and collagen,
or wherein the meat emulsion comprises a fibrillar protein and at least one polysaccharide.

2. The product of claim 1 wherein at least one of the one or more hydrocolloid dispersions and the meat emulsion comprise an element selected from the group consisting of palatability enhancers, colorants, preservatives, visible pieces of ingredients, solubilized nutritional ingredients, flavor compounds, aroma compounds, encapsulated flavors, and encapsulated nutrients.

3. The product of claim 1 wherein the meat emulsion is completely encasing the one or more hydrocolloid dispersions, or wherein the meat emulsion is substantially encasing the one or more hydrocolloid dispersions, where the one or more hydrocolloid dispersions are substantially encased if less than 25% of the one or more hydrocolloid dispersions are visible on the surface of the food product.

4. The product of claim 1 wherein the product is a canned companion animal food product.

5. A method for making a canned food product of claim 1 comprising:
forming one or more hydrocolloid dispersions;
forming a meat emulsion;
filling the one or more hydrocolloid dispersions and the meat emulsion into a can such that the meat emulsion encases the one or more hydrocolloid dispersions;
hermetically sealing the can, and retorting the filled can.

6. The method of claim 5 wherein the filled can is inverted before retorting.

7. The method of claim 5 wherein the filled can is retorted at a temperature of from about 121 to about 126°C for from about 25 to about 50 minutes.

8. The method of claim 5 further comprising cooling the retorted can, preferably wherein the retorted can is cooled to a temperature of 20°C to 35°C.

9. The method of claim 5 wherein the steps of filling the can with the one or more hydrocolloid dispersions and filling the can with the meat emulsion comprise delivering a portion of the meat emulsion to the can, adding the one or more hydrocolloid dispersions onto the portion of the meat emulsion, and covering the one or more hydrocolloid dispersions with a remaining portion of the meat emulsion.

10. The method of claim 5 wherein the steps of filling the can with the one or more hydrocolloid dispersions and filling the can with the meat emulsion comprise delivering the meat emulsion to the can and injecting the one or more hydrocolloid dispersions into the meat emulsion.

11. The method of claim 5 wherein the steps of filling the can with the one or more hydrocolloid dispersions and filling the can with the meat emulsion comprise co-extruding the one or more hydrocolloid dispersions at a first rate and the meat emulsion at a second rate and adjusting the first rate and the second rate to allow the meat emulsion to encase the one or more hydrocolloid dispersions.

12. The method of claim 5 wherein the meat emulsion completely encases the one or more hydrocolloid dispersions.

13. The method of claim 5 wherein the meat emulsion substantially encases the one or more hydrocolloid dispersions, where the one or more hydrocolloid dispersions are substantially encased if less than 25% of the one or more hydrocolloid dispersions are visible on the surface of the food product.

14. The method of claim 5 wherein the product is a canned companion animal food product.

## Patentansprüche

1. Dosennahrungsmittelprodukt, umfassend:
eine Dose, die Dose umfassend:
eine oder mehrere Hydrokolloiddispersionen in dem Inneren der Dose; wobei jede der einen oder der mehreren Hydrokolloiddispersionen ein fließfähiges Sol ist, das ein cremiges Aussehen aufweist, das aus der Gruppe ausgewählt ist, bestehend aus Xanthan, Carboxymethylcellulose, Konjak, Guar, Agar-Agar, Gummi arabicum, Johannisbrotkernmehl, Kassia, Akazie, Alginat, Karob oder einer Kombination davon und umfassend von etwa 25 bis etwa 75 % des Nahrungsmittelprodukts; und
eine Fleischemulsion, die die eine oder die mehreren Hydrokolloiddispersionen umhüllt; wobei die Fleischemulsion Muskelfleisch und Kollagen umfasst,
oder wobei die Fleischemulsion ein fibrilläres Protein und mindestens ein Polysaccharid umfasst.

2. Produkt nach Anspruch 1, wobei mindestens eine der einen oder der mehreren Hydrokolloiddispersionen und der Fleischemulsion ein Element umfasst, das aus der Gruppe ausgewählt ist, bestehend aus Schmackhaftigkeitsverstärkern, Farbstoffen, Konservierungsmitteln, sichtbaren Stücken von Zutaten, gelösten Nährstoffzutaten, Geschmacksstoffverbindungen, Aromastoffverbindungen, eingekapselten Geschmacksstoffen und eingekapselten Nährstoffen.

3. Produkt nach Anspruch 1, wobei die Fleischemulsion die eine oder die mehreren Hydrokolloiddispersionen vollständig umhüllt, oder wobei die Fleischemulsion die eine oder die mehreren Hydrokolloiddispersionen im Wesentlichen umhüllt, wobei die eine oder die mehreren Hydrokolloiddispersionen im Wesentlichen umhüllt sind, falls weniger als 25 % der einen oder der mehreren Hydrokolloiddispersionen auf der Oberfläche des Nahrungsmittelprodukts sichtbar sind.

4. Produkt nach Anspruch 1, wobei das Produkt ein Dosennahrungsmittelprodukt für Haustiere ist.

5. Verfahren zum Herstellen eines Dosennahrungsmittelprodukts nach Anspruch 1, umfassend:
Ausbilden einer oder mehrerer Hydrokolloiddispersionen;
Ausbilden einer Fleischemulsion;
derartiges Abfüllen der einen oder der mehreren Hydrokolloiddispersionen und der Fleischemulsion in eine Dose, dass die Fleischemulsion die eine oder die mehreren Hydrokolloiddispersionen umhüllt;
hermetisches Verschließen der Dose und Retortenbehandeln der gefüllten Dose.

6. Verfahren nach Anspruch 5, wobei die gefüllte Dose vor dem Retortenbehandeln umgedreht wird.

7. Verfahren nach Anspruch 5, wobei die gefüllte Dose bei einer Temperatur von etwa 121 bis etwa 126 °C von etwa 25 bis etwa 50 Minuten retortenbehandelt wird.

8. Verfahren nach Anspruch 5, ferner umfassend ein Kühlen der retortenbehandelten Dose, vorzugsweise wobei die retortenbehandelte Dose auf eine Temperatur von 20 °C bis 35 °C gekühlt wird.

9. Verfahren nach Anspruch 5, wobei die Schritte des Füllens der Dose mit der einen oder den mehreren Hydrokolloiddispersionen und des Füllens der Dose mit der Fleischemulsion ein Zuführen eines Anteils der Fleischemulsion in die Dose, ein Hinzufügen der einen oder der mehreren Hydrokolloiddispersionen auf den Anteil der Fleischemulsion, und ein Bedecken der einen oder der mehreren Hydrokolloiddispersionen mit einem verbleibenden Anteil der Fleischemulsion umfassen.

10. Verfahren nach Anspruch 5, wobei die Schritte des Füllens der Dose mit der einen oder den mehreren Hydrokolloiddispersionen und des Füllens der Dose mit der Fleischemulsion das Zuführen der Fleischemulsion in die Dose und ein Einspritzen der einen oder der mehreren Hydrokolloiddispersionen in die Fleischemulsion umfassen.

11. Verfahren nach Anspruch 5, wobei die Schritte des Füllens der Dose mit der der einen oder den mehreren Hydrokolloiddispersionen und des Füllens der Dose mit der Fleischemulsion ein gemeinsames Extrudieren der einen oder der mehreren Hydrokolloiddispersionen mit einer ersten Geschwindigkeit und der Fleischemulsion mit einer zweiten Geschwindigkeit und ein Anpassen der ersten Geschwindigkeit und der zweiten Geschwindigkeit umfassen, um der Fleischemulsion zu ermöglichen, die eine oder die mehreren Hydrokolloiddispersionen zu umhüllen.

12. Verfahren nach Anspruch 5, wobei die Fleischemulsion die eine oder die mehreren Hydrokolloiddispersionen vollständig umhüllt.

13. Verfahren nach Anspruch 5, wobei die Fleischemulsion die eine oder die mehreren Hydrokolloiddispersionen im Wesentlichen umhüllt, wobei die eine oder die mehreren Hydrokolloiddispersionen im Wesentlichen umhüllt sind, falls weniger als 25 % der einen oder der mehreren Hydrokolloiddispersionen auf der Oberfläche des Nahrungsmittelprodukts sichtbar sind.

14. Produkt nach Anspruch 5, wobei das Produkt ein Dosennahrungsmittelprodukt für Haustiere ist.

## Revendications

1. Produit alimentaire en conserve comprenant :
une boîte de conserve, la boîte de conserve comprenant :
une ou plusieurs dispersions d'hydrocolloïdes à l'intérieur de la boîte de conserve ; chacune de la ou des dispersions d'hydrocolloïdes est un sol apte à l'écoulement ayant un aspect crémeux choisi dans le groupe constitué de xanthane, carboxyméthylcellulose, konjac, guar, agar-agar, gomme arabique, gomme de caroube, casse, acacia, alginate, caroube, ou une combinaison de ceux-ci, et représentant entre environ 25 et environ 75 % du produit alimentaire ; et
une émulsion de viande enveloppant la ou les dispersions d'hydrocolloïdes ; dans lequel l'émulsion de viande comprend de la viande musculaire et du collagène,
ou dans lequel l'émulsion de viande comprend une protéine fibrillaire et au moins un polysaccharide.

2. Produit selon la revendication 1, dans lequel au moins l'une parmi la ou les dispersions d'hydrocolloïdes et l'émulsion de viande comprend un élément choisi dans le groupe constitué d'exhausteurs d'appétence, colorants, conservateurs, morceaux visibles d'ingrédients, ingrédients nutritionnels solubilisés, composés de saveur, composés d'arôme, arômes encapsulés et nutriments encapsulés.

3. Produit selon la revendication 1, dans lequel l'émulsion de viande enveloppe complètement la ou les dispersions d'hydrocolloïdes, ou dans lequel l'émulsion de viande enveloppe substantiellement la ou les dispersions d'hydrocolloïdes, où la ou les dispersions d'hydrocolloïdes sont substantiellement enveloppées si moins de 25 % de la ou des dispersions d'hydrocolloïdes sont visibles à la surface du produit alimentaire.

4. Produit selon la revendication 1, dans lequel le produit est un produit alimentaire en conserve pour animaux de compagnie.

5. Procédé de fabrication d'un produit alimentaire en conserve selon la revendication 1, comprenant :
la formation d'une ou plusieurs dispersions d'hydrocolloïdes ;
la formation d'une émulsion de viande ;
le remplissage de la ou des dispersions d'hydrocolloïdes et de l'émulsion de viande dans une boîte de conserve de sorte que l'émulsion de viande enveloppe la ou les dispersions d'hydrocolloïdes ;
le scellement hermétique de la boîte de conserve et la stérilisation de la boîte de conserve remplie en autoclave.

6. Procédé selon la revendication 5, dans lequel la boîte de conserve remplie est retournée avant la stérilisation en autoclave.

7. Procédé selon la revendication 5, dans lequel la boîte de conserve remplie est stérilisée en autoclave à une température allant d'environ 121 à environ 126 °C pendant environ 25 à environ 50 minutes.

8. Procédé selon la revendication 5, comprenant en outre le refroidissement de la boîte de conserve stérilisée en autoclave, de préférence, dans lequel la boîte de conserve stérilisée en autoclave est refroidie à une température comprise entre 20 °C et 35 °C.

9. Procédé selon la revendication 5, dans lequel les étapes de remplissage de la boîte de conserve avec la ou les dispersions d'hydrocolloïdes et le remplissage de la boîte de conserve avec l'émulsion de viande comprennent l'introduction d'une partie de l'émulsion de viande dans la boîte de conserve, l'ajout de la ou des dispersions d'hydro-colloïdes sur la partie de l'émulsion de viande et le recouvrement de la ou des dispersions d'hydrocolloïdes avec une partie restante de l'émulsion de viande.

10. Procédé selon la revendication 5, dans lequel les étapes de remplissage de la boîte de conserve avec la ou les dispersions d'hydrocolloïdes et de remplissage de la boîte de conserve avec l'émulsion de viande comprennent l'introduction de l'émulsion de viande dans la boîte de conserve et l'injection de la ou des dispersions d'hydrocol-loïdes dans l'émulsion de viande.

11. Procédé selon la revendication 5, dans lequel les étapes de remplissage de la boîte de conserve avec la ou les dispersions d'hydrocolloïdes et de remplissage de la boîte de conserve avec l'émulsion de viande comprennent la co-extrusion de la ou des dispersions d'hydrocolloïdes à une première vitesse et de l'émulsion de viande à une seconde vitesse et l'ajustement de la première vitesse et de la seconde vitesse pour permettre à l'émulsion de viande d'envelopper la ou les dispersions d'hydrocolloïdes.

12. Procédé selon la revendication 5, dans lequel l'émulsion de viande enveloppe complètement la ou les dispersions d'hydrocolloïdes.

13. Procédé selon la revendication 5, dans lequel l'émulsion de viande enveloppe substantiellement la ou les dispersions d'hydrocolloïdes, où la ou les dispersions d'hy-drocolloïdes sont substantiellement enveloppées si moins de 25 % de la ou des dispersions d'hydrocolloïdes sont visibles à la surface du produit alimentaire.

14. Procédé selon la revendication 5, dans lequel le produit est un produit alimentaire en conserve pour animaux de compagnie.
